# EUROPEAN PATENT APPLICATION

(11) **EP 4 806 784 A1**
(43) Date of publication of application: **16.09.2026**
(21) Application number: 25162980.4
(22) Date of filing: 11.03.2025
(51) Int. Cl.: B64C 27/26, B64C 27/82, B64C 3/10, B64C 39/04

(54) **COMPOUND HELICOPTER WITH LATERAL BOOMS**

(71) Applicant: AIRBUS HELICOPTERS DEUTSCHLAND GmbH, 86609 Donauwörth (DE)
(72) Inventor: Dr FINK, Axel, 86609 DONAUWÖRTH (DE); Dr BLACHA, Martin, 86609 DONAUWÖRTH (DE)
(74) Representative: GPI Brevets

(57) **Abstract**

The invention relates to a compound helicopter (100) comprising a fuselage (150), a main rotor (120) arranged at an upper fuselage section (213) of the fuselage (150) for generating lift in operation, two cantilever wings (140) arranged within a main rotor disc (130) defined by the main rotor (120), two lateral booms (181, 182) respectively connected to the two cantilever wings (140), and a pusher propeller (110) arranged within the main rotor disc (130). The two cantilever wings (140) are attached to a rear fuselage section (158) of the fuselage (150) and laterally extending on each side of the fuselage (150). The lateral booms (181, 182) are extending rearwardly beyond a rear fuselage end (159) of the fuselage (150) in a longitudinal direction (111). The pusher propeller (110) for generating forward thrust in operation is attached to the rear fuselage end (159) between the two lateral booms (181, 183).

## Description

The present embodiments relate to a compound helicopter with a fuselage, a main rotor that is at least adapted for generating lift in operation, and a fixed wing arrangement that is laterally extending from the fuselage.

Conventional helicopters are typically characterized by the use of a main rotor and a tail boom with an auxiliary tail rotor that is adapted to counter torque. In addition to the tail rotor, the tail boom often has stabilizing vertical and horizontal tail planes that are mounted, together with the tail rotor, at the aft portion of the tail boom.

Documents EP 3 254 962 B1 and US 11,780,575 B2 describe an anti-torque device used on conventional helicopters with one single main rotor and one single tail boom. By way of example, the device described in document EP 3 254 962 B1 is composed of a plurality of electrically driven, individually controlled and preferably shrouded rotors mounted on the aft end of the tail boom. The use of an electrical drive substituting a conventional mechanical drive for the tail rotor of conventional helicopters may be provided for functional, operational, and/or environmental advantages.

However, in comparison to simple mechanical drives, the plurality of electrically driven rotors shows a tendency to be heavier, which is penalizing for smaller helicopters with conventional architectures facing weight and balance characteristics.

The tail boom of modern helicopters is essentially a closed cylindrical structure which extends rearward of the fuselage. The tail boom is typically designed either as a fish tail, which is characterized by a smooth transition from the fuselage to the tail boom structure, or as a beam tail, which extends from the upper portion of the rear fuselage.

The tail boom represents a relatively long aft structural prolongation with respect to the longitudinal extension of the fuselage, as it is intended for providing a large lever arm for the tail surfaces with respect to the helicopter's center of gravity which essentially corresponds to a respective rotor mast position. A large lever arm enables a reduction in size of the vertical and horizontal tail surfaces and the power and rotor disc size required by the tail rotor to counter torque.

At high forward velocities, the vertical surfaces at the tail boom are typically designed to provide for passive anti-torque capabilities, as well as for directional flight stability. The horizontal tail surfaces are designed to provide for sufficient longitudinal flight stability.

Typically, conventional helicopters suffer from the interaction of the main rotor wake and the horizontal tail planes, especially at hover and small forward speeds. Therefore, in order to reduce the interaction of the main rotor wake and the horizontal tail planes, the tail planes and the tail rotor are typically arranged outside the perimeter of the main rotor disc when looked at the helicopter from above.

However, tail booms have a negative effect on the overall dynamic behavior of the helicopter. For example, helicopters with tail booms often suffer from tail shake phenomenon and structural fatigue issues. Furthermore, tail boom ground strikes do happen frequently in practice and the corresponding loads often are dimensioning for the tail boom junction. Because of their size, tail booms often require a heavy dismountable junction to the fuselage for air transportation or for interchangeability requirements.

Compound helicopters and so-called convertiplanes are basically the most relevant concepts aiming to overcome horizontal flight deficiencies of conventional helicopters by introducing attributes of fixed-wing aircrafts to such conventional helicopters as a compromise. However, a compromise between both aircraft types has always to be conveniently adapted to a planned mission profile of a given helicopter.

Recently, compound helicopters for high-speed flight have been developed. Such compound helicopters typically introduce additional lifting and thrusting devices to conventional helicopters. Lifting devices often include wings, whereas thrusting devices are mostly related to additional propellers. For instance, document US 5,738,301 A describes a compound helicopter with a single main rotor, a pair of cantilever wings extending at each side of the fuselage, and an empennage at the rearmost end of a single tail structure that incorporates a shrouded rotor providing thrust and a shrouded rotor providing anti-torque.

However, for such a compound helicopter, special challenges are associated with the anti-torque capabilities that compensate the main rotor torque and with the required minimization of the physical and functional complexity of the overall dynamic system and the interactions between all components involved therein. The interactions between these components are related to the downwash of the main rotor and the propeller wakes and strongly depend on the allocations of the components relative to each other. In addition, the size and allocation of the propellers are demanding in terms of clearance with respect to the main rotor and the ground, with respect to the operational safety characteristics for the operators on ground and with the required weight balance of the entire arrangement.

Document US 2020/0223540 A1 describes a winged compound helicopter with a pair of wings at each side of the helicopter. The winged compound helicopter further has a single tail boom incorporating at its rearmost end a pusher propeller generating thrust and a lateral rotor providing anti-torque. In contrast to document US 5,738,301 A, the tail rotor described in this document is allocated behind the pusher propeller and might be open or shrouded.

The arrangements described in documents US 2020/0223540 A1 and US 5,738,301 A and similar arrangements with pusher propellers and anti-torque rotors allocated at the rearmost end of a tail boom result in a penalty in terms of weight and balance, since considerable mass (associated to propellers, shrouds, drive shafts and sometimes even gear boxes) is allocated at the rearmost end of the helicopter which is the most critical location of the helicopter for adding mass.

Furthermore, the operational safety on ground is seriously impacted if shrouds are being omitted for weight saving, as described and shown in some embodiments of document US 2020/0223540 A1. In fact, the pusher rotor typically features a considerable disc diameter with a lower end that is close to the ground, and thereby represents a potential safety hazard for the operators on ground.

Moreover, documents US 5,738,301 A and US 2020/0223540 A1 both describe that the mechanical coupling to the main rotor keeps the tail rotors rotating as long as the main rotor rotates, thereby further increasing the safety hazard for the operators on ground. Both, a mechanical decoupling of the tail rotors or the stop of the main rotor (and hence the tail rotors) are not suitable in terms of weight efficiency and operational flexibility. In addition, ensuring sufficient ground clearance of the huge pusher propeller during landing requires the implementation of a rear landing gear close to the tail, which further increases the weight in the rear section of the helicopter and aggravates even more the challenging weight and balance characteristics of this solution.

Document RU 2 555 086 C1, in turn, describes a compound helicopter with one main rotor, one single pusher propeller and one lateral rotor installed on the aft end of a single tail boom. The pusher propeller is not arranged at the aft end of the tail boom but close to the main rotor axis within the transition of the rear fuselage to the tail boom, the tail boom being attached to the fuselage by means of a shroud which houses the pusher propeller. The tail rotor is shown as a shrouded rotor installed within the tail fin. Both the pusher and the tail rotor are mechanically driven by the same drive-shaft. This configuration outstands by its compactness and hence its maneuvering capabilities, as well as by its inherent safety characteristics on ground, reduced aerodynamic interactions between the rotors and propeller and weight balance capabilities.

However, the integration of the pusher propeller between the fuselage and the tail boom represents a special challenge for the structural continuity around the pusher propeller, for the tail boom stiffness, and for dismounting the pusher rotor and/or the tail boom for repair and maintenance.

A compound helicopter with two main intermeshing main rotors and one aft pusher propeller is described in document EP 40 08 628 B1, wherein the anti-torque is provided by the two main intermeshing rotors. Consequently, the complexity of the combination of a tail pusher with a tail rotor is cancelled but at the expense of an increased complexity in the main rotor. Furthermore, the described compound helicopter also features a tail boom that has a negative effect on the overall dynamic behavior of the helicopter as described above.

Another high-speed helicopter is described in document US 8,596,569 B2 with a pusher propeller installed at the rearmost end of a single tail boom providing thrust and one single lateral rotor installed at the front end of the helicopter providing anti-torque. The pusher propeller is shown as an open rotor and is mechanically driven by the main gear box, whereas the front rotor is being electrically driven by an electrical motor and a generator. This arrangement is one example addressing a hybrid drivetrain for a high-speed helicopter. However, it lacks inherent safety characteristics, operational characteristics (e. g., allocation of radar on the nose would be impossible), as well as directional stability performance.

It is, therefore, an object of the present invention to provide a new compound helicopter that overcomes the above described drawbacks. Such a new compound helicopter should allow for high speeds, have a simple overall physical and functional architecture, provide minimized aerodynamic interactions between a forward thrusting device and the main rotor, as well as additional thrust, lift, and anti-torque means while increasing the operational safety on ground.

This object is solved by a compound helicopter comprising the features of claim 1. More specifically, the compound helicopter comprises a fuselage, a main rotor, at least two cantilever wings, a first lateral boom, a second lateral boom, and a pusher propeller. The fuselage extends in a longitudinal direction from a front fuselage section through a center fuselage section and a rear fuselage section to a rear fuselage end, and in a vertical direction from a lower fuselage section to an upper fuselage section. The main rotor is arranged at the upper fuselage section and at least adapted for generating lift in operation, the main rotor comprising at least two rotor blades that form a main rotor disc during rotation of the main rotor. The at least two cantilever wings are completely arranged within the main rotor disc and attached to the rear fuselage section. A first cantilever wing of the at least two cantilever wings laterally extends from the fuselage at a port side, and a second cantilever wing of the at least two cantilever wings laterally extends from the fuselage at a starboard side. The first lateral boom is connected to the first cantilever wing, and the second lateral boom is connected to the second cantilever wing. The first and second lateral booms extending rearwardly beyond the rear fuselage end in the longitudinal direction. The pusher propeller is arranged within the main rotor disc between the first and second lateral booms, attached to the rear fuselage end, and at least adapted for generating forward thrust in operation.

The overall architectural arrangement of the compound helicopter is suited for helicopters and could be applied as well on heavy drones. However, for simplicity and clarity, the aircraft are hereinafter referred to as "compound helicopter".

Illustratively, the compound helicopter comprises one main rotor on top of the fuselage, a lifting device, a thrust device, an anti-torque device, and a horizontal stabilizer. The fuselage has the rear fuselage end within the perimeter of the main rotor disc. More specifically, the lifting device relieves the main rotor from generating lift in forward flight and may be accomplished by a pair of cantilever wings, one at each side of the helicopter.

By way of example, the compound helicopter comprises two lateral booms, which are individually referred to as first lateral boom and second lateral boom. Illustratively, each side of the helicopter is provided with one of the two lateral booms, which extend rearwardly beyond the rear fuselage end. Each one of the two lateral booms is arranged distantly apart from the main fuselage and is attached to the cantilever wing at the side of the helicopter. Illustratively, each cantilever wing may comprise one wing inboard section and one wing outboard section, which are separated by the associated lateral boom.

The wing inboard sections of the cantilever wings may be designed with larger thickness and chord than the wing outboard sections, thereby generating more lift and having more inner volume and sectional inertia than the wing outboard sections. A large lifting surface close to the fuselage is beneficial in terms of minimizing the downward pressure caused by the downwash of the main rotor. The aerodynamic efficiency of the short-span inboard sponson wings can be improved by the end plate effect of the lateral booms if conveniently designed.

More specifically, the wing inboard section may be designed as a lift generating sponson, with a large sectional inertia to provide for a stiff support of the lateral booms. Hence, the wing inboard section may be also referred to as "inboard sponson wing". The inboard sponson wing may be designed with large inner volume to house systems, equipment or even serving as external fuel tank compartment. By way of example, the wing inboard section may be used at least partially as fuel compartment. If desired, the wing inboard section may be used as step-on surface for maintenance operations and providing additional buoyancy volume in a ditching scenario.

Illustratively, the wing outboard sections may have less thickness and chord than the wing inboard sections. If desired, the wing outboard sections may have a negative sweep with a resultant center of lift ahead of the center of lift of the wing inboard sections. The wing inboard sections may be arranged within the rear section of the fuselage, with a center of lift aft of the main rotor axis.

If desired, the wing outboard sections may be detachable from the helicopter to allow for transportability or for the adaptation of the wing outboard section configuration depending on the mission. By way of example, the wing integration of the wing inboard and outboard sections may be designed following a modular approach, whereby the outboard wings can be exchanged, quickly installed, and adapted to specific mission profiles.

Alternatively, the wing outboard sections may be foldable in order to improve transportation capabilities. More specifically, the wing outboard sections may be foldable about a longitudinal axis at the root to the lateral booms. Furthermore, the lateral booms may be advantageously dismountable from the cantilever wings, if desired.

Illustratively, the wing inboard sections may be allocated at the lower section of the fuselage. If desired, the inboard sponson wings may alternatively be allocated at the middle or upper section of the fuselage to e. g. fit a differential arrangement of the rear rotors.

Illustratively, the anti-torque device of the helicopter counteracts the main rotor torque and may be accomplished by a pair of rear rotors. More specifically, each of the lateral booms may comprise a fin at the aft end. Each fin can house a rear rotor. If desired, the rear rotors may comprise at least one electrically driven fan. Preferably, the electric fans are ducted and housed within the corresponding fin. If desired, a set of equal or different fans may be implemented as the rear rotors.

By way of example, the electric fans may be part of an overall electric powertrain with associated devices such as electric motors, generators, power converters, and power harnesses. Illustratively, the input to the electric motor driving the fan may be derived from a generator driven off the main rotor gearbox. The electric powertrain devices may be housed within the fuselage, the wings, and/or the lateral booms.

Preferably, the electric fan may be directly driven by an electric motor coaxially installed with the fan. The electric motor and the associated electric fan may form an assembly within the rear rotor. The coaxial installation of electric motor and fan facilitates cooling of the motor.

If desired, the electric fan may alternatively be indirectly driven by a separately installed electric motor (e.g., via a shaft) which may be installed within the lateral boom. Installing the electric motor within the lateral boom would facilitate installation, improve center of gravity, and ensure protection of the electric motor from environmental influences.

Using ducted rear rotors housed within the fins reduces the interaction between the rear rotors and the main rotor. Since the duct shields the fans from the main rotor's wake, noise emissions are also reduced. Furthermore, the duct of the fan increases thrust by suction on the upstream lips of the duct, thereby reducing the required diameter for a given total thrust and thus the weight of the rear rotor.

In addition, the small diameter of the fans and the associated smaller duct width allow keeping the airfoil fin thickness small, hence achieving an optimized streamline quality of the fin with the integrated duct of the fan.

Advantageously, the use of electrically driven fans as rear rotors improves the weight and balance quality, avoiding the need of heavy and susceptible mechanical gears and drive shafts which would be arranged far behind the center of gravity of the compound helicopter and within the most critical perimeter of the compound helicopter and thereby would face weight and balance requirements.

More specifically, the lack of drive shafts would allow for an important simplification of the design of the lateral boom and the engine deck, which further potentially leads to secondary weight reductions. In addition, the elimination of the requirement for a straight and well supported routing path of a tail drive shaft from the main gear box to a tail rotor enables new architectural options at the overall aircraft level.

The weight advantage is even more pronounced when two smaller fans are used instead of one large fan, since the weight of a fan increases disproportionately with the fan's diameter (e. g., the weight of the duct increases cubically with its diameter).

Moreover, redundant electrical drive systems increase operational reliability by avoiding single-load path elements (e. g., shafts). Thus, the use of two fans that are allocated distantly apart from each other on the lateral booms improves the safety characteristics compared to the use of one bigger fan due to redundancy and physical separation of the rear rotors and the respective power lines. In addition, since electric motors can be overdriven for a predetermined period of time, each of the two fans can be designed with fail safe characteristics, thereby ensuring safe landing without detrimental weight impact. The lack of drive shafts would also allow for an important simplification of the design of the lateral booms and the engine deck, which further potentially leads to secondary weight reductions.

Since electrically driven fans have no mechanical coupling with the main gear box, the direct and fixed dependance of the rear rotors with the main rotor is eliminated. Thus, the rear rotors can be operated independently of the operation of the main rotor. Illustratively, the rear rotors can have different speeds of rotation than the main rotor on ground or in flight depending on the performance and operational needs. For instance, the electrically driven fans of the rear rotors could be optionally stopped when the helicopter is on ground, thereby providing better on-ground safety.

The outstanding on-ground safety characteristic may be further enhanced by arranging a thrust device such as a pusher propeller between the two lateral booms. Such a pusher propeller relieves the main rotor from generating thrust in forward flight.

Illustratively, the pusher propeller is arranged at the rear fuselage end between two lateral booms behind the wing inboard sections. If desired, the pusher propeller may be mechanically connected to the main rotor and rotate in sync with the main rotor when the compound helicopter is positioned on ground. The lateral booms may provide a physical barrier between an operator on ground and the rotating pusher propeller.

By way of example, the pusher propeller may be positioned close to the main rotor axis, which considerably reduces the interaction between the downwash of the main rotor and the pusher propeller, thereby consequently reducing noise generation and vibrations.

Positioning a relative huge and heavy pusher propeller close to the center of gravity of the helicopter avoids a negative impact of the pusher propeller on the center of gravity and herewith on the weight balance characteristics of the compound helicopter. Such negative impact would generally occur if a pusher propeller were installed on the rearmost end of a single tail boom.

Furthermore, the pusher propeller may consume a large portion of the total power in high-speed forward flight similar to the power required by the main rotor during hover. By arranging the pusher propeller close to the main rotor and main gear box, the highly-loaded drive shaft of the pusher propeller can be kept short, thereby reducing its weight, simplifying its dynamic behavior, and minimizing its support needs.

Moreover, the stiff and strong structural fuselage periphery is beneficial for the installation, fixation, and support of the pusher propeller at the rear fuselage section. Such an arrangement also offers a simplification of the drive line by minimizing the need for susceptible and heavy elastic hinges which otherwise would be typically needed to cope with elastic deformations of the supporting structure and more especially for long distances between the main gear box and rotors.

Illustratively, the pusher propeller may be large in diameter in comparison to the fuselage cross-section. Arranging the pusher propeller close to the main rotor and close to a main landing gear results in sufficient ground clearance and a sufficient safety distance from the main rotor blades without the need of specific additional means.

More specifically, using a tailwheel landing gear arrangement would be mandatory for a pusher propeller that is installed on the aftmost end of a tail boom for ensuring sufficient ground clearance of the pusher propeller during landing. However, with the allocation of the pusher propeller close to the center of gravity, a nosewheel landing gear arrangement would still be an option which would advantageously avoid additional weight aft of the center of gravity caused by tailwheel landing gears and save the reinforcements on the tail structure coping with landing load cases. Thus, arranging the pusher propeller close to the center of gravity advantageously avoids additional mass aft of the center of gravity of the compound helicopter. Avoiding excess additional mass aft of the center of gravity also improves maneuverability of the compound helicopter.

If desired, the pusher propeller may rotate in a properly chosen rotation direction such that the torque of the pusher propeller may be at least partially compensated by a torque moment generated by the rear rotors. More specifically, the rear rotors and/or the fins may be inclined with respect to the vertical axis of the helicopter. As such, vertical components of the thrust of the rear rotors may generate a torque moment that can be used to compensate at least partially the torque of the pusher propeller.

Furthermore, inclining the rear rotors and the fins with respect to the vertical axis advantageously decreases the effect that the wakes of the rear rotors have on each other. Illustratively, the fins have fin tips at their respective uppermost ends. If desired, the fins and/or the rear rotors are inclined to each other towards the fin tips.

According to some aspects, the horizontal stabilizer may connect the fins with each other. Preferably, the horizontal stabilizer may interconnect the fins at their tips. Alternatively, the horizontal stabilizer may interconnect both fins in locations other than at their tips. For instance, the horizontal stabilizer may interconnect the fins at the lower portion of the fins. A lower position of the stabilizer improves the inherent safety characteristics by rearwardly shielding the accessibility to the pusher propeller and improves the overall stiffness of the lateral booms' assembly.

Illustratively, the lateral booms may feature a section profile that produces passive anti-torque from downwash of the main rotor during hovering. If desired, the cross section of the lateral booms may be designed asymmetrically with respect to the vertical axis.

According to some aspects, the main landing gear may be retracted in longitudinal direction either to the front or to the rear and housed at least partially within the lateral booms. Such arrangement would allow a simple main landing gear design. Furthermore, the helicopter may rest on its own landing gear when the wings and/or the rear portions of the lateral booms have been removed for transport, maintenance, or repair.

According to some aspects, the compound helicopter may comprise a first fin that is connected to an aft end of the first lateral boom; and a second fin that is connected to an aft end of the second lateral boom.

According to some aspects, the compound helicopter may comprise a horizontal stabilizer that connects the first fin with the second fin.

According to some aspects, the horizontal stabilizer may be connected to the first fin and to the second fin at a respective fin tip.

According to some aspects, the compound helicopter may comprise a first rear rotor that is integrated within the first fin; and a second rear rotor that is integrated within the second fin.

According to some aspects, the first and second rear rotors may each comprise an electric fan.

According to some aspects, the compound helicopter may comprise first and second electric motors that drive the first and second rear rotors.

If desired, the first and second motors may be coaxially installed with the first and second rear rotors or installed within the first and second lateral booms.

According to some aspects, the first and second rear rotors and/or the first and second fins are inclined towards each other by a rear rotor inclination angle relative to the vertical direction.

According to some aspects, the first and second fins and/or a thrust of the first and second rear rotors compensate at least partially a pusher propeller torque of the pusher propeller.

According to some aspects, a cross section of the first lateral boom is asymmetric.

According to some aspects, the first cantilever wing may comprise a wing inboard section arranged between the fuselage and the first lateral boom; and a wing outboard section that laterally extends from a wing junction at the first lateral boom.

According to some aspects, a chord of the first cantilever wing may be larger at the wing inboard section than at the wing outboard section.

If desired, the first cantilever wing may be thicker at the wing inboard section than at the wing outboard section.

According to some aspects, the wing outboard section of the first cantilever wing may have a negative sweep angle.

If desired, the wing outboard section of the first cantilever wing may be removably attached to the first lateral boom at the wing junction.

According to some aspects, the first cantilever wing may be attached to the rear fuselage section at the lower fuselage section.

According to some aspects, the compound helicopter may comprise a wheel-type landing gear with a main landing gear that is at least partially retractable into the first and second lateral booms.

Preferred embodiments are outlined by way of example in the following description with reference to the attached drawings. In these attached drawings, identical or identically functioning components and elements are labeled with identical reference numbers and characters and are, consequently, only described once in the following description.
- Figure 1 shows a top view of an illustrative compound helicopter in accordance with some embodiments,
- Figure 2 shows a side view of the illustrative compound helicopter of Figure 1 in accordance with some embodiments,
- Figure 3 shows a side view of another illustrative compound helicopter in accordance with some embodiments,
- Figure 4 shows a front view of the illustrative compound helicopter of Figure 1 in accordance with some embodiments, and
- Figure 5 shows a top view of the illustrative compound helicopter of Figure 1 with dismounted wing outboard sections.

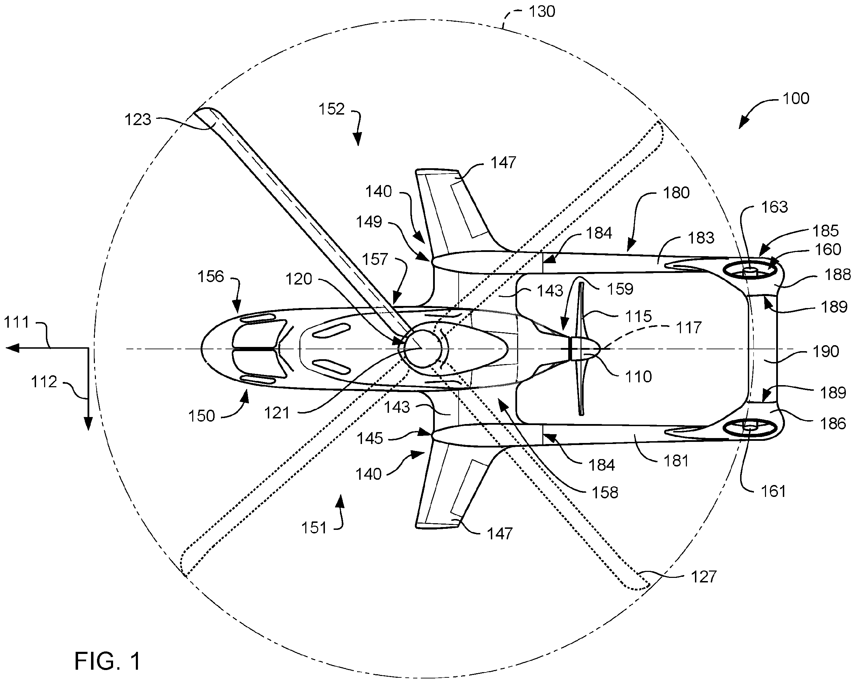

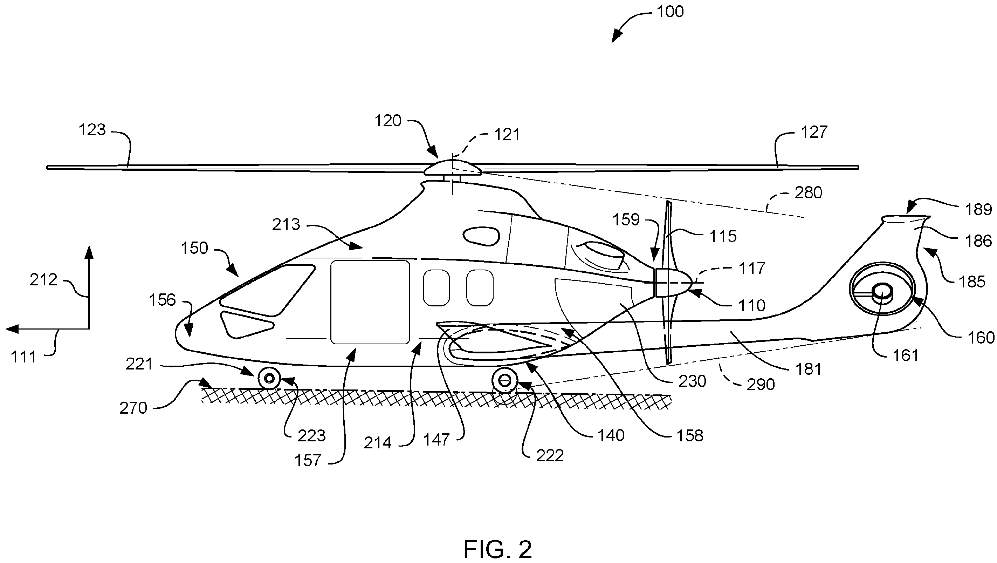

Figure 1 and Figure 2 show an illustrative compound helicopter 100. The compound helicopter 100 extends in a longitudinal direction, a lateral resp. transversal direction, and a vertical direction. According to Figure 1, the longitudinal direction and the lateral resp. transversal direction are respectively oriented along a longitudinal axis 111 and a lateral resp. transversal axis 112 of the compound helicopter 100 and are, therefore, also referred to as "longitudinal direction 111" and "lateral direction 112" hereinafter. According to Figure 2, the vertical direction is oriented along a vertical axis 212 and, therefore, also referred to as "vertical direction 212" hereinafter. It is understood that, unless explicitly stated otherwise, an extension of an object in a certain direction can be understood as extending positively or negatively along the associated axis and/or in parallel thereto.

The longitudinal direction 111 is in parallel to the roll axis inherent to the compound helicopter 100. The lateral direction 112 is perpendicular to the roll axis and in parallel to the pitch axis of the compound helicopter 100. The plane formed by the longitudinal direction 111 and the lateral direction 112 may be considered to be "horizontal" and may correspond to a top view plane of the compound helicopter 100 as shown in Figure 1. The plane formed by the longitudinal direction 111 and the lateral direction 112 is sometimes also referred to as the horizontal plane or the X-Y plane.

The vertical direction 212 is in parallel to the yaw axis of the compound helicopter 100 and is oriented perpendicular with respect to the X-Y plane. The plane formed by the longitudinal direction 111 and the vertical direction 212 may correspond to a side view plane of the compound helicopter 100 as illustrated in Figure 2. The plane formed by the longitudinal direction 111 and the vertical direction 212 is sometimes also referred to as the X-Z plane.

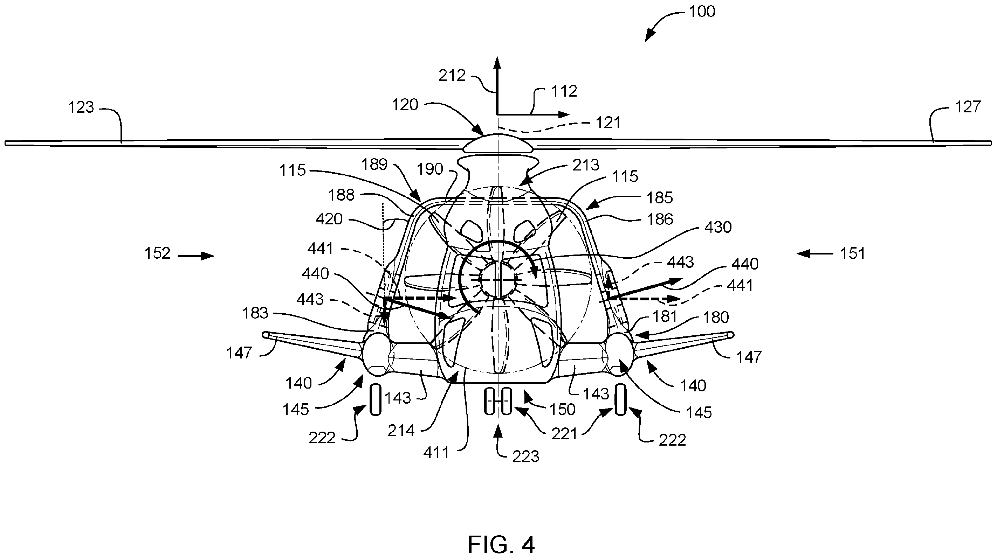

The plane formed by the lateral direction 112 and the vertical direction 212 may correspond to a front-view plane of the compound helicopter 100 as illustrated in Figure 4. The plane formed by the lateral direction 112 and the vertical direction 212 is sometimes also referred to as the Y-Z plane.

It should be noted that for the remainder of this description the expression "extending in the longitudinal direction 111" means that the respective extension is predominantly in the longitudinal direction 111. However, the extension can in addition also have a predetermined angle with respect to the vertical direction 212 and/or the lateral direction 112. As an example, an object with an extension that deviates between ±45° from the longitudinal direction 111 may be called an object that extends in the longitudinal direction 111.

Similarly, the expression "extending in the lateral direction 112" means that the extension is predominantly in the lateral direction 112. However, the extension can in addition also have a predetermined angle with respect to the vertical direction 212 and/or the longitudinal direction 111. As an example, an object with an extension that deviates between ±45° from the lateral direction 112 may be called an object that extends in the lateral direction 112.

Moreover, the expression "extending in the vertical direction 212" means that the extension is predominantly in the vertical direction 212. However, the extension can in addition also have a predetermined angle with respect to the lateral direction 112 and/or the longitudinal direction 111. As an example, an object with an extension that deviates between ±45° from the vertical direction 212 may be called an object that extends in the vertical direction 212.

Illustratively, Figure 1 shows the compound helicopter 100 with fuselage 150. The fuselage 150 extends in the longitudinal direction 111 from a front fuselage section 156 through a center fuselage section 157 and a rear fuselage section 158 to a rear fuselage end 159. The rear fuselage end 159 is illustratively formed at the outermost end of the rear fuselage section 158. The fuselage 150 also extends in the lateral direction 112 between a port side 151 and a starboard side 152.

The compound helicopter 100 comprises a main rotor 120 that is at least adapted for generating lift in operation. The main rotor 120 is arranged on top of the compound helicopter 100, i. e. at an upper fuselage section (e.g., upper fuselage section 213 of Figure 2). Illustratively, the main rotor 120 includes at least two rotor blades 123, 127 which rotate about a main rotor axis 121. The at least two rotor blades 123, 127 form a main rotor disc 130 during rotation of the main rotor 120.

As shown in Figure 1, the compound helicopter 100 includes at least two cantilever wings 140 that are completely arranged within the main rotor disc 130. The at least two cantilever wings 140 are illustratively attached to the rear fuselage section 158.

More specifically, the at least two cantilever wings 140 comprise a first cantilever wing 140 and a second cantilever wing 140. The first cantilever wing 140 laterally extends from the fuselage 150 at the port side 151, and the second cantilever wing 140 laterally extends from the fuselage 150 at the starboard side 152.

Illustratively, the first cantilever wing 140 may comprise a wing inboard section 143 and a wing outboard section 147. If desired, the second cantilever wing 140 may comprise another wing inboard section 143 and another wing outboard section 147.

The arrangement of the first cantilever wing 140 and the second cantilever wing 140 may be symmetrical with respect to the longitudinal direction 111. More specifically, the port side 151 of the compound helicopter 100 may be configured in a substantially mirror-symmetric manner with respect to the starboard side 152 of the compound helicopter 100.

The compound helicopter 100 comprises at least two lateral booms 180 which includes a first lateral boom 181 that is connected to the first cantilever wing 140, and a second lateral boom 183 that is connected to the second cantilever wing 140. Illustratively, the first and second lateral booms 180 extend rearwardly beyond the rear fuselage end 159 in the longitudinal direction 111. If desired, the first lateral boom 181 may be supported by the first cantilever wing 143, and the second later boom 183 may be supported by the second cantilever wing 140.

By way of example, on the port side 151 of the compound helicopter 100, the wing inboard section 143 may be arranged between the fuselage 150 and the first lateral boom 181, and the wing outboard section 147 may laterally extend from a wing junction 145 at the first lateral boom 181. The wing junction 145 is allocated at the outboard portion of the first lateral boom 181. Symmetrically, on the starboard side 152 of the compound helicopter 100, the other wing inboard section 143 may be arranged between the fuselage 150 and the second lateral boom 183, and the other wing outboard section 147 may laterally extend from another wing junction 145 at the second lateral boom 183. The other wing junction 145 is allocated at the outboard portion of the second lateral boom 183. In other words, the first and second lateral booms 180 may be allocated distantly apart from the rear fuselage section 158 respectively on the port side 151 and the starboard side 152 of the compound helicopter 100. The first and second lateral booms 180 may respectively separate the first and the second cantilever wings 140 into the respective wing inboard sections 143 and the wing outboard sections 147.

If desired, the first and second lateral booms 180 may be detachable. More specifically, an aft section of the first lateral boom 181 may be detached from a front section of the first lateral boom 181 at a releasable lateral boom junction 184, for example for repair or transportation. Similarly, an aft section of the second lateral boom 183 may be detached from a front section of the second lateral boom 183 at another releasable lateral boom junction 184. Illustratively, the lateral boom junctions 184 may be arranged ahead of the rear fuselage end 159 in the longitudinal axis 111.

As shown in Figure 1, the wing outboard section 147 of the first cantilever wing 140 may have a negative sweep angle. That is, the tip of the wing outboard section 147 may be arranged ahead of the root of the wing outboard section 147. If desired, a chord of the first cantilever wing 140 may be larger at the wing inboard section 143 than at the wing outboard section 147.

Illustratively, the arrangement of the second cantilever wing 140 may be symmetrical to that of the first cantilever wing 140 with respect to the longitudinal direction 111. More specifically, the wing outboard section 147 of the second cantilever wing 140 may also have a negative sweep angle, and a chord of the second cantilever wing 140 may be larger at the wing inboard section 143 than at the wing outboard section 147.

The compound helicopter 100 further comprises a pusher propeller 110 that is at least adapted for generating forward thrust in operation. The pusher propeller 110 is attached to the rear fuselage end 159 between the first and second lateral booms 180. As shown in Figure 1, the pusher propeller 110 is arranged within the main rotor disc 130.

Illustratively, the pusher propeller 110 may comprise a set of pusher propeller blades 115 which rotate about a pusher propeller axis 117. If desired, the allocation of the pusher propeller 110 is close to the main rotor axis 121.

If desired, the compound helicopter 100 may include fins 185. The fins 185 may include a first fin 186 and a second fin 188. Illustratively, the first fin 186 may be connected to an aft end of the first lateral boom 181, and the second fin 188 may be connected to an aft end of the second lateral boom 183. The first fin 186 and the second fin 188 each have a respective fin tip 189 at the uppermost extremity of the respective fin 187, 188.

By way of example, the compound helicopter 100 may include a horizontal stabilizer 190 that connects the first fin 186 with the second fin 188. As an example, the horizontal stabilizer 190 may be connected to the first fin 186 and to the second fin 188 at the respective fin tip 189.

If desired, each one of the first fin 186 and the second fin 188 may be provided with a rear rotor 160. More specifically, the compound helicopter 100 may include a first rear rotor 161 and a second rear rotor 163. The first rear rotor 161 may be illustratively integrated within the first fin 186, and the second rear rotor 163 may be illustratively integrated within the second fin 188.

If desired, the first and second rear rotors 161, 163 may each comprise an electric fan. By way of example, the electric fans may be ducted electric fans that are shrouded by the fins 185.

If desired, the compound helicopter 100 may comprise a first electric motor that drives the first rear rotor 161. The first electric motor may be coaxially installed with the first rear rotor 161. Alternatively, the first electric motor may be installed within the first lateral boom 181. The separately installed first electric motor may drive the first rear rotor 161 by a shaft. Furthermore, the compound helicopter 100 may comprise a second electric motor driving the second rear rotor 163, the second electric motor may be coaxially installed with the second rear rotor 163 or installed within the second lateral boom 183.

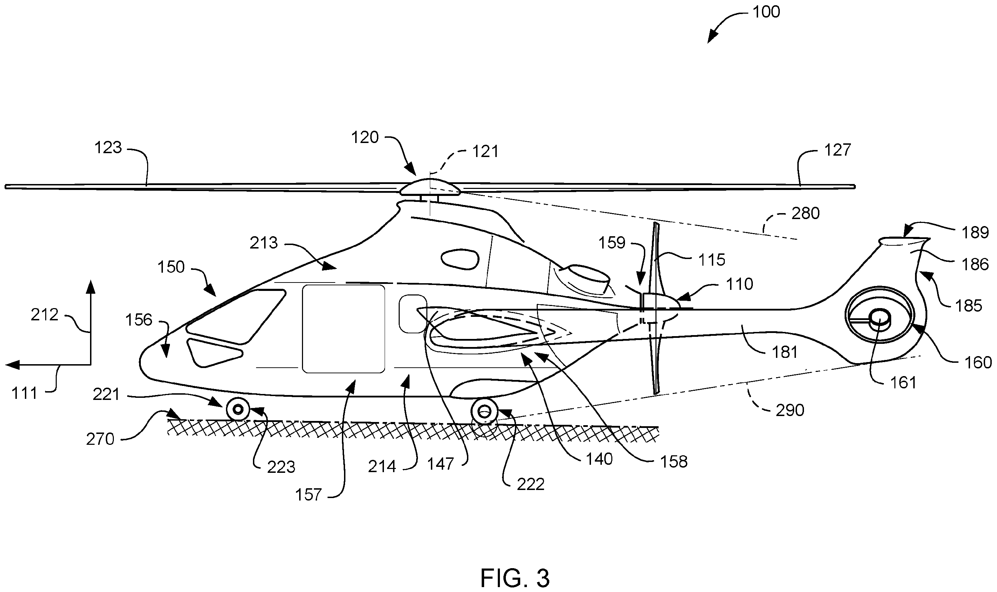

At this point, it should be noted that, for simplicity and clarity, not all the structures on the starboard side 152 of the compound helicopter 100 are described in detail. In fact, only the structures on the port side 151 of the compound helicopter 100 as shown e. g. in Figure 2 and Figure 3 are representatively for both sides of the compound helicopter 100 described in more detail throughout the present disclosure and may be adapted for structures on both sides partially or entirely. Therefore, the following description of the port side 151 and the components arranged thereon is understood to be representative for both sides of the compound helicopter 100, i. e. the port side 151 and the starboard side 152.

Figure 2 shows the port side 151 of the compound helicopter 100 of Figure 1. The first cantilever wing 140 is attached to the rear fuselage section 158 of the fuselage 150. The first lateral boom 181 is connected to the first cantilever wing 140 and extends rearwardly beyond the rear fuselage end 159 and the pusher propeller 110. At the aftmost end of the first lateral boom 181, the first fin 186 may incorporate a first rear rotor 161 which may comprise a ducted electric fan.

As show in Figure 2, the fuselage 150 extends in vertical direction 212 from a lower fuselage section 214 to an upper fuselage section 213. Illustratively, the first cantilever wing 140 may be attached to the rear fuselage section 158 at the lower fuselage section 214.

If desired, the rear fuselage section 158 may comprise a rear maintenance hatch 230. The rear maintenance hatch 230 may provide a direct access to equipment, systems, or power plant items inside the fuselage 150.

Illustratively, the pusher propeller 110 may be arranged close to the upper fuselage section 213 of the fuselage 150. The pusher propeller blades 115 are preferably configurated with tips that extend at most between a main rotor clearance limit 280 and a ground clearance limit 290. By way of example, the main rotor clearance limit 280 delimits a minimum distance between the pusher propeller blades 115 and the main rotor blades 123, 127 at any condition during operation such that a collision of the pusher propeller blades 115 with the main rotor blades 123, 127 is prevented. The ground clearance limit 290 is defined by a tangent to the first lateral boom 181 or the first fin 186 starting from the lowest point of the main landing gear 222. Maintaining the pusher propeller blade tips within the ground clearance limit 290 prevents the pusher propeller blades 115 from touching the ground 270 (e. g., during landing).

The compound helicopter 100 is illustratively standing on ground 270. By way of example, the compound helicopter 100 may comprise a wheel-type landing gear 221 which is shown extended on the ground 270. Illustratively, the wheel-type landing gear 221 may comprise a nose landing gear 223 and a main landing gear 222. More specifically, the nose landing gear 223 may be allocated at the front fuselage section 156 and the main landing gear 222 may be arranged close to the main rotor axis 121 at the rear fuselage section 158.

Illustratively, the main landing gear 222 is at least partially retractable into the first and second lateral booms 181, 183. If desired, the main landing gear 222 may be alternatively attached to the lower fuselage section 214, as shown in Figure 3.

Figure 3 shows the port side 151 of the compound helicopter 100 with a higher vertical allocation of the cantilever wings 140 in accordance with some embodiments. Illustratively, the fuselage 150, the main rotor 120, and the pusher propeller 110 of the compound helicopter 100 of Figure 3 may be arranged in the same manner as shown for the compound helicopter 100 of Figure 2.

In contrast to the compound helicopter 100 of Figure 2, the cantilever wings 140 of Figure 3 may be attached to the rear fuselage section 158 between the lower fuselage section 214 and the upper fuselage section 213.

Illustratively, the lateral boom, which is representatively illustrated by the first lateral boom 141, may be attached to the cantilever wing 140 at a higher vertical allocation. As such, the front section of the first lateral boom 141 is located within a middle portion of the rear fuselage section 158 that is between the lower fuselage section 214 and the upper fuselage section 213. More specially, the first lateral boom 141 is shown at a predetermined distance from the main landing gear 222 that is greater than the distance between the lateral boom 141 and the main landing gear of Figure 2. **If** desired, the main landing gear 222 may be stored within the lower fuselage section 214.

As shown in Figure 3, the fins 185 extend further in direction to the ground from the lateral boom 141 compared to the fins 185 of Figure 2. Thereby, the ground clearance limit 290 is substantially at the same distance in vertical direction 212 from the pusher propeller axis (e.g., pusher propeller axis 117 of Figure 1) allowing for a same size of the pusher propeller blades 115 as in Figure 2. Illustratively, independent of the vertical allocation of the cantilever wings 140, the pusher propeller 110 may be substantially shielded by the cantilever wings 140, the fins 185, and the horizontal stabilizer 190 to ensure the safety of maintenance personal on the ground 270 as described in more detail at Figure 4 below.

Figure 4 shows a front view of the compound helicopter 100 of Figure 1. Illustratively, the cantilever wings 140 are arranged at the lower fuselage section 214 with the wing inboard sections 143 arranged between the fuselage 150 and the lateral booms 180 and the wing outboard sections 147 laterally extending from the wing junctions 145 at the respective lateral booms 180. As shown in Figure 4, the main landing gear 222 of the wheel-type landing gear 221 may be aligned with the lateral booms 180 allowing for a large track and for storing the main landing gear 22 inside the lateral booms 180 during flight.

Illustratively, a cross section of the first lateral boom 181 may be asymmetric. If desired, a cross section of the second lateral boom 183 may likewise be asymmetric. The asymmetric cross section of the lateral booms 180 may be adapted for generating a passive anti-torque in hover as an effect of the main rotor downwash.

As shown in Figure 4, on the port side 151, the first cantilever wing 140 may be thicker at the wing inboard section 143 than at the wing outboard section 147. If desired, on the starboard side 152, the second cantilever wing 140 may be thicker at the other wing inboard section 143 than at the other wing outboard section 147. Illustratively, the fuselage 150, the wing inboard sections 143, the fins 185, and the horizontal stabilizer 190 define a safety perimeter around the pusher propeller such that a pusher propeller disc 411 that is defined by the rotating pusher propeller blades 115 of the pusher propeller 110 is completely allocated within the safety perimeter, thereby shielding any operators on the ground from any rotating pusher propeller blades 115.

By way of example, the first and second fins 186, 188 may be inclined towards each other. If desired, the first and second rear rotors 161, 163 that are integrated within the first and second fins 186, 188 may likewise be inclined towards each other. By way of example, the first and second rear rotors 161, 163 and/or the first and second fins 186, 188 may be inclined towards each other by a rear rotor inclination angle 420 relative to the vertical direction 212. Illustratively, the first and second fins 186, 188 may come closer to each other towards the fin tips 189. The horizontal stabilizer 190 may connect the first fin 186 with the second fin 188. If desired, the horizontal stabilizer 190 may connect the first fin 186 with that second fin 188 at the fin tips 189.

Advantageously, the inclination of the first and second rear rotors 161, 163 in combination with a predetermined distance therebetween reduces the wake from one rear rotor impinging into the intake of the other rear rotor.

Illustratively, the inclination of the rear rotors 161, 163 by the rear rotor inclination angle 420 may result in a rear rotor thrust 440 with a rear rotor thrust lateral component 441 and a rear rotor thrust vertical component 443. By way of example, the first and second fins 186, 188 and/or a thrust of the first and second rear rotors 161, 163 may compensate at least partially a pusher propeller torque 430 of the pusher propeller 110.

A proper orientation of the pusher propeller 110 may at least partially cancel a pusher propeller torque 430 by torque associated with the antagonistic rear rotor thrust vertical component 443. Similarly, the thrust vectors of the rear rotors 161, 163 represent lifting vectors of passive lift loads generated by the first and second fins 186, 188 at high-speed that may complement the lifting induced by the cantilever wings 140.

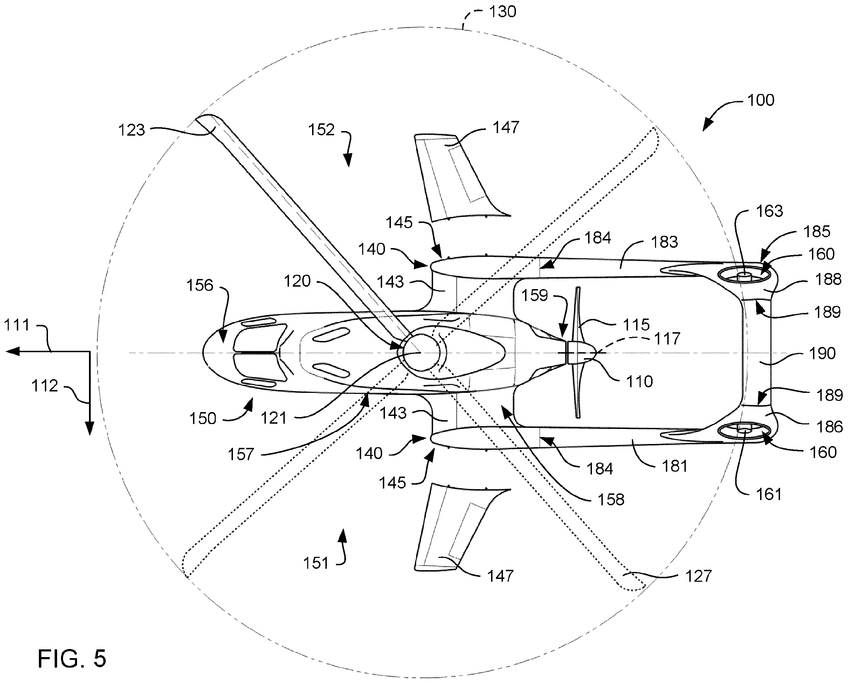

Figure 5 shows the cantilever wings 140 as being at least partially dismountable. More specifically, the wing outboard sections 147 may be dismounted at their respective roots. By way of example, the wing outboard section 147 of the first cantilever wing 140 may be removably attached to the first lateral boom 181 at the wing junction 145. If desired, the wing outboard section 147 of the second cantilever wing 140 may likewise be removably attached to the second lateral boom 183 at the other wing junction 145.

Illustratively, the wing outboard sections 147 may be detached from the compound helicopter 100 at the wing junctions 145, and if desired, the aft sections of the lateral booms 181, 183 may be detached from the compound helicopter 100 at the lateral boom junctions 184 to facilitate repair or transportation. Nevertheless, in any circumstance, the compound helicopter 100 may be sufficiently supported by the nose landing gear 223 and the main landing gear 222 as shown in Figure 4 without the wing outboard section 147 and the aft sections of the lateral booms 181, 183.

It should be noted that modifications to the above described embodiments are within the common knowledge of the person skilled in the art and, thus, also considered as being part of the present invention. It should further be noted that the drawings are only intended for schematically representing embodiments of the present invention and not for showing detailed constructions thereof.

For instance, the compound helicopter 100 of Figure 2 is shown with the retractable wheel-type landing gear 221. However, if desired, the wheel-type landing gear 221 may be unretractable or other types of landing gears (e.g., skid-type landing gear) may instead be provided and mounted to the lateral booms 180 and/or to the lower fuselage section 214.

Furthermore, the horizontal stabilizer 190 of the compound helicopter 100 of Figure 4 is shown connected to the first fin 186 and the second fin 188 at respective fin tips 189. However, if desired, the horizontal stabilizer 190 may be alternatively attached at any position to the fins 185, such as at a position that is below, in front, or behind the rear rotors 160, or be attached onto the lateral booms 180 directly.

Moreover, the wing outboard sections 147 of the compound helicopter 100 of Figure 5 is shown as detachable at the wing junctions 145. However, if desired, the wing outboard sections 147 may be hinged at the wing junctions 145 and be upwardly foldable.

### Reference List

- 100: Compound helicopter
- 110: Pusher propeller
- 111: Longitudinal axis
- 112: Lateral resp. transversal axis
- 115: Pusher propeller blade
- 117: Pusher propeller axis
- 120: Main rotor
- 121: Main rotor axis
- 123, 127: Rotor blade
- 130: Main rotor disc
- 140: Cantilever wing
- 143: Wing inboard section
- 145: Wing junction
- 147: Wing outboard section
- 150: Fuselage
- 151: Port side
- 152: Starboard side
- 156: Front fuselage section
- 157: Center fuselage section
- 158: Rear fuselage section
- 159: Rear fuselage end
- 160: Rear rotors
- 161, 163: Rear rotor
- 180: Lateral booms
- 181, 183: Lateral boom
- 184: Lateral boom junction
- 185: Fins
- 186, 188: Fin
- 189: Fin tip
- 190: Horizontal stabilizer
- 212: Vertical axis
- 213: Upper fuselage section
- 214: Lower fuselage section
- 221: Wheel-type landing gear
- 222: Main landing gear
- 223: Nose landing gear
- 230: Rear maintenance hatch
- 270: Ground
- 280: Main rotor clearance limit
- 290: Ground clearance limit
- 411: Pusher propeller disc
- 420: Rear rotor inclination angle
- 430: Pusher propeller torque
- 440: Rear rotor thrust
- 441: Rear rotor thrust lateral component
- 443: Rear rotor thrust vertical component

## Claims

1. A compound helicopter (100) comprising:
a fuselage (150) that extends in a longitudinal direction (111) from a front fuselage section (156) through a center fuselage section (157) and a rear fuselage section (158) to a rear fuselage end (159), and in a vertical direction (212) from a lower fuselage section (214) to an upper fuselage section (213);
a main rotor (120) that is arranged at the upper fuselage section (213) and at least adapted for generating lift in operation, the main rotor (120) comprising at least two rotor blades (123, 127) that form a main rotor disc (130) during rotation of the main rotor (120);
at least two cantilever wings (140) that are completely arranged within the main rotor disc (130) and attached to the rear fuselage section (158), wherein a first cantilever wing (140) of the at least two cantilever wings (140) laterally extends from the fuselage (150) at a port side (151), and a second cantilever wing (140) of the at least two cantilever wings (140) laterally extends from the fuselage (150) at a starboard side (152);
a first lateral boom (181) that is connected to the first cantilever wing (140), and a second lateral boom (183) that is connected to the second cantilever wing (140), the first and second lateral booms (180) extending rearwardly beyond the rear fuselage end (159) in the longitudinal direction (111), and
a pusher propeller (110) that is arranged within the main rotor disc (130) between the first and second lateral booms (180), attached to the rear fuselage end (159), and at least adapted for generating forward thrust in operation.

2. The compound helicopter (100) of claim 1, further comprising:
a first fin (186) that is connected to an aft end of the first lateral boom (181); and
a second fin (188) that is connected to an aft end of the second lateral boom (183).

3. The compound helicopter (100) of claim 2, further comprising:
a horizontal stabilizer (190) that connects the first fin (186) with the second fin (188).

4. The compound helicopter (100) of claim 3, wherein the horizontal stabilizer (190) is connected to the first fin (186) and to the second fin (188) at a respective fin tip (189).

5. The compound helicopter (100) of any one of claims 2 to 4, further comprising:
a first rear rotor (161) that is integrated within the first fin (186); and
a second rear rotor (163) that is integrated within the second fin (188).

6. The compound helicopter (100) of claim 5, wherein the first and second rear rotors (161, 163) each comprise an electric fan.

7. The compound helicopter (100) of claim 6, further comprising:
first and second electric motors that drive the first and second rear rotors (161, 163), wherein the first and second motors are coaxially installed with the first and second rear rotors (161, 163) or installed within the first and second lateral booms (181, 183).

8. The compound helicopter (100) of any one of claims 5 to 7, wherein the first and second rear rotors (161, 163) and/or the first and second fins (186, 188) are inclined towards each other by a rear rotor inclination angle (420) relative to the vertical direction (212).

9. The compound helicopter (100) of any one of claims 5 to 8, wherein the first and second fins (186, 188) and/or a thrust of the first and second rear rotors (161, 163) compensate at least partially a pusher propeller torque (430) of the pusher propeller (110).

10. The compound helicopter (100) of any one of the preceding claims, wherein a cross section of the first lateral boom (181) is asymmetric.

11. The compound helicopter (100) of any one of the preceding claims, wherein the first cantilever wing (140) comprises:
a wing inboard section (143) arranged between the fuselage (150) and the first lateral boom (181); and
a wing outboard section (147) that laterally extends from a wing junction (145) at the first lateral boom (181).

12. The compound helicopter (100) of any one of the preceding claims, wherein a chord of the first cantilever wing (140) is larger at the wing inboard section (143) than at the wing outboard section (147), and wherein the first cantilever wing (140) is thicker at the wing inboard section (143) than at the wing outboard section (147).

13. The compound helicopter (100) of any one of claims 11 or 12, wherein the wing outboard section (147) of the first cantilever wing (140) has a negative sweep angle and is removably attached to the first lateral boom (181) at the wing junction (145).

14. The compound helicopter (100) of any one of the preceding claims, wherein the first cantilever wing (140) is attached to the rear fuselage section (158) at the lower fuselage section (214).

15. The compound helicopter (100) of any one of the preceding claims, further comprising:
a wheel-type landing gear (221) with a main landing gear (222) that is at least partially retractable into the first and second lateral booms (181, 183).
